# EUROPEAN PATENT APPLICATION

(11) **EP 2 206 433 A1**
(43) Date of publication of application: **14.07.2010**
(21) Application number: 09425002.4
(22) Date of filing: 12.01.2009
(51) Int. Cl.: A21B 3/13

(54) **Flexible stable mould or tray and process for manufacturing it**

(71) Applicant: Tosini, Giorgio, 24060 Credaro (BG) (IT)
(72) Inventor: Tosini, Giorgio, 24060 Credaro (BG) (IT)
(74) Representative: Garavelli, Paolo

(57) **Abstract**

A mould or tray for foodstuffs is described, comprising an elastic and flexible edge (2), equipped with at least one rigid reinforcement (9, 10), an elastic and flexible container (1, 5), in which the edge (2) is adapted to structurally cooperate due to a "pre-loaded effort" status. A process is further described for producing such mould or tray.

## Description

The present invention relates to a flexible stable mould or tray, equipped with mechanical characteristics that improve its use during handling and transport, avoiding to overturn the paste or confectionery contained therein. The present invention further relates to a process for manufacturing such mould or tray.

The prior art for a flexible stable tray is given by document EP-A-1197149 (Silital S.p.A.-Tefal S.A.), *"Flexible mould for confectionery, bread-making and similar, with support and stiffening element",* wherein an edge is claimed, that is welded and integral with a reinforcing member, and by document US-A-22171027 (Martellato), *"Food mould made of flexible materials modified for insertion of support and comprising the same",* wherein a bent edge or an edge with undercut is claimed, in which a separable and movable reinforcing member is housed.

According to the mentioned prior art, the reinforcing member prevents the flexible tray edge from collapsing; moreover, the flexibility of tray walls is not impaired, such flexibility being necessary, after cooking and solidification, for making the confectionery detachment easier.

A problem present in the technologic sector of flexible containers for foodstuffs is given by the scarce cooperation of structural support of the elastomer of which objects, tools, etc. are made.

In this case, the reinforcing member made of metal or plastic with glass fiber, though adhering to the tray edge, has no carrying cooperation from the elastomer in which it is immersed and of which the tray edge is composed.

The "normal effort" status of the edge equipped with reinforcing member of a flexible mould or tray for foodstuffs is surpassed by the "pre-loaded effort" status. The "pre-loaded effort" status, in fact, characterises the edge of a flexible mould or tray equipped with a reinforcing member as described in the present document.

Object of the present invention is providing a new mould or tray for foodstuffs, of the type comprising: an elastic and flexible edge equipped with a rigid reinforcement member; and an elastic and flexible container; in which the material adhering to such reinforcing member structurally cooperates due to a "pre-loaded effort" status.

A further object of the present invention is providing a new mould or tray for foodstuffs, in which such "pre-loaded effort" status highly reduces the distortion of the elastic and flexible edge with the same sizes of the reinforcing member.

A further object of the present invention is providing a new process for manufacturing a mould or tray for foodstuffs, in which the geometric configuration, associated with said "pre-loaded effort" status, derives from a geometric configuration associated with a "normal effort" status.

The above and other objects and advantages of the invention, as will result from the following description, are obtained with a mould or tray for foodstuffs and with a process for manufacturing it as described in the related independent claims. Preferred embodiments and non-trivial variations of the present invention are the subject matter of the dependent claims.

A new mould or tray for foodstuffs and its related manufacturing process are the subject matter of a detailed description, with reference to the enclosed figures:
- Figures 1, 3a, 3b, 6, 8, 10, 12 and 14: axonometric, projection views and parts of a stable, flexible mould or tray in the geometric configuration of the "normal effort" status;
- Figures 2, 4a, 4b, 7, 9, 11, 13 and 15: axonometric, projection views and parts of a stable mould or tray in the geometric configuration of the "pre-loaded effort" status;
- Figure 5: plan view of a mould described in the previous figures;
- Figures 16, 17a,b: axonometric and projection views of a wire-shaped reinforcing member;
- Figures 18, 19a,b: axonometric and projection views of a reinforcing member shaped as a lamina.

As shown in the Figures, a mould or tray according to the present invention comprises a container delimited by side walls 1 converging towards a plate bottom 5 and projecting towards a continuous edge made of limbs 2.

Walls 1, bottom 5 and edge 2 are made of an elastomer for foodstuffs to allow a quick detachment of the foodstuff due to the flexibility pertaining to the elastomer. Other flexible materials, deriving from the elastomer or physically similar thereto, are the subject matter of a dependent clam as described in the present document.

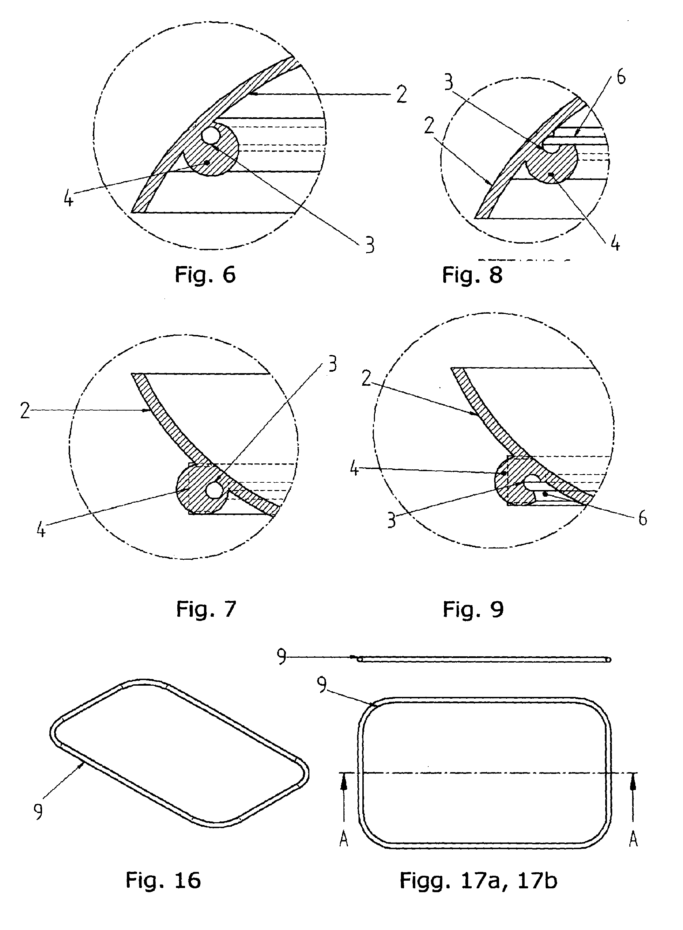

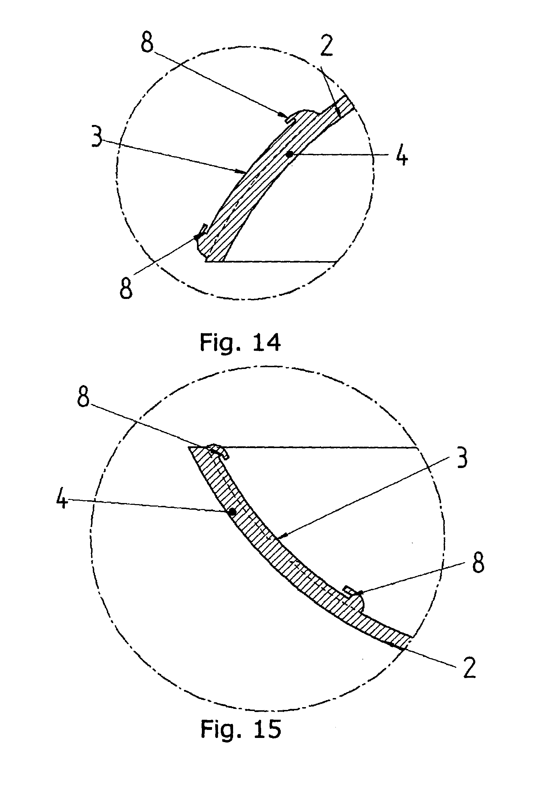

The edge 2 is crossed by a rigid annular reinforcement 9, 10, this latter one having a circular section whose diameter is less than the thickness of the edge 2 or a laminar section whose width is the same as the projecting size of the edge 2. The rigid annular reinforcement 9, 10 is immersed in the elastomer composing the edge 2; in this case, the rigid annular reinforcement 9, 10 is housed in its own seat 3, being wound in the lower section or rib 4 of the edge 2 and in the upper section or cover 7 composing the edge 2; the lower section or rib 4 can fully cover the rigid annular reinforcement 9, 10; according to a variation of the invention shown in Figures 8 and 9, said lower section or rib 4 can only partially cover the rigid annular reinforcement 9, making this latter one accessible through a groove 6; according to a further variation of the invention shown in Figures 14 and 15, said upper section or cover 7 can be absent or only partially cover the rigid annular reinforcement 10, ensuring and constraining this latter one to its own seat 3 by means of a pair of projecting undercuts 8 in a single piece with the upper section of the edge 2.

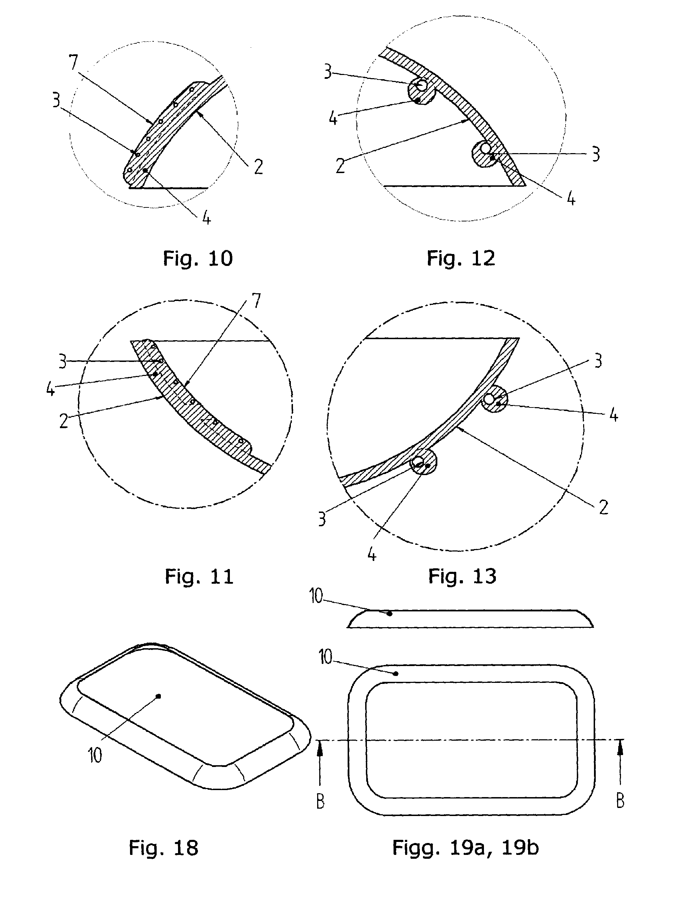

According to a further variation of the invention shown in Figures 10, 11, 12 and 13, a series of coaxial reinforcements 9 occupies their respective seats 3 wound by lower sections or ribs 4 and repaired by upper sections or covers 7.

According to a further variation of the described system, a tissue reinforced with rigid entangled wire arranged towards the projecting side of the edge 2 (not shown) is wound by a lower section 4 of the edge 2 and repaired by an upper layer 7 of the edge 2.

The flexible mould or tray can assume two geometric configurations, both stable, to which two effort statuses correspond, respectively "normal" and "pre-loaded".

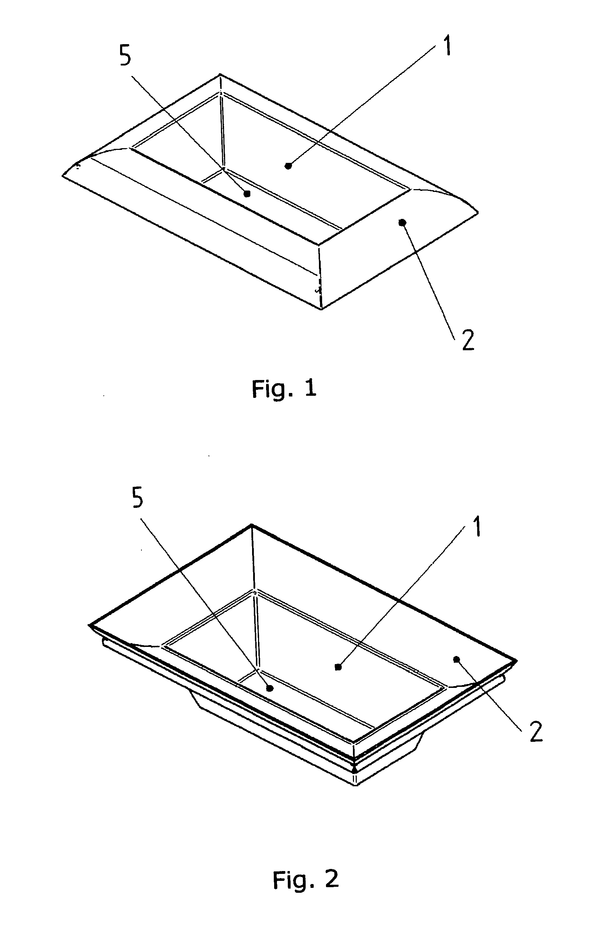

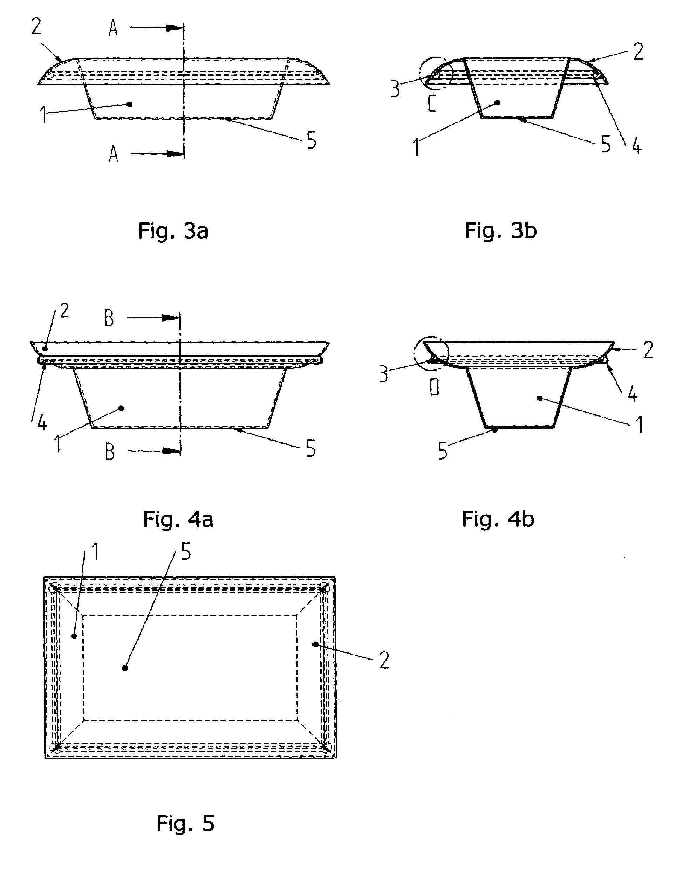

The geometric configuration associated with the "normal effort" status corresponds to a tray, shown in Figures 1, 3a, 3b, 6, 8, 10, 12 and 14, obtained by moulding through known, prior art processes.

The geometric configuration associated with a "pre-loaded effort" status corresponds to the moulded tray, after the slanting or concavity of the edge 2 limbs has been manually modified and reversed, as shown in Figures 2, 4a, 4b, 7, 9, 11, 13 and 15.

The tray in its "normal effort" status is different from the known prior art, given by documents EP-A-1197149 (Silital S.p.A.-Tefal S.A.) and US-A-22171027 (Martellato), due to the edge 2, concave or convex or slanted with respect to a horizontal line.

The tray in the pre-loaded effort status, instead, is the novelty according to the claims attached to this specification.

The structural cooperation induced by the "pre-loaded effort" status depends on the geometric-constructive measures adopted at the beginning, in the "normal effort" configuration. Said measures deal in particular with:
- the recess 3, in which the rigid reinforcement 9, 10 is housed, is immersed in the edge 2 at a height for which the upper layer 7 is thin, while the lower layer 4 has a big thickness. In this way, the upper layer 7 performs the "iron-cover" function, while the lower layer 4 structurally cooperates in passing from the "normal" configuration to the "pre-loaded" configuration, being stretched, elongated and tightening the rigid reinforcement 9, 10 housed in the seat 3;
- the variation of the invention shown in Figures 8 and 9, in which the rigid annular reinforcement 9 is made accessible through the groove 6, said groove 6 being located in an area away from the layer or rib 4; more precisely, the groove 6 is located in an area in which, in the "pre-loaded" configuration, the elastomer is compressed. In this way, the groove 6 allows inserting the rigid reinforcement 9 in the "normal effort" configuration, namely before being closed as occurs when one passes from the "normal" configuration to the "pre-loaded" one;
- in the same way, the variation of the invention shown in Figures 14 and 15, in which the pair of projecting undercuts 8 in a single piece with the upper section of the edge 2, in the "normal effort" configuration, holds the rigid reinforcement 10, to then block it following the passage to the "pre-loaded" configuration, with the result of keeping the reinforcement 10 fixed in its own working position;
- in the variation of the invention shown in Figures 10, 11, 12 and 13, the lower layer or the lower ribs 4 are thicker than the simple "iron-cover" 7, ensuring the structural cooperation of the stretched material 4 following the passage from the "normal" configuration to the "pre-loaded" configuration.

The stable flexible mould or tray is made according to a process comprising two different steps:
a) moulding the elastomeric mass, or the mass with similar physical properties, by means of a mould suitably connected to the reinforcement 9, 10;
b) changing the geometric shape of the edge 2 by reverting the slanting or concavity of the edge 2, with the consequent stretching of the elastomer 4 distributed next to the reinforcement 9, 10;
c) transporting and lifting the tray, by grasping the edge 2 with the fingers of a hand.

The "pre-loaded" stable flexible mould or tray satisfies the objective of structurally cooperating with the elastomer 4 distributed around the reinforcement 9, 10.

Due to the improved structural cooperation of the elastomer around the reinforcement 9, 10, it is possible to handle the tray filled with paste or confectionery with a lower distortion of the edge and consequently of the whole flexible tray.

The stable flexible mould or tray is preferably made of an elastic deformable material, of the type known in the foodstuff field according to directives in force. In particular, reference is made to thermoplastic material, silicone, elastomer; in this case: platinum silicone, particularly suitable for freezing at -50°C and cooking at 300°C; peroxide silicone; elastomer suitable for cooking at 300°C and freezing at -50°C.

Thermoplastic material or elastomers, suitably treated in the vulcanisation (dynamic vulcanisation) step, capable of capturing and keeping air with the result of obtaining a lightweight and insulating structure, allow making a stable flexible mould or tray with better insulating and lightweight characteristics.

Thermoplastic material or elastomers, worked in a plate and suitably pre-formed and assembled with glass cloth, allow making a stable flexible mould or tray with high mechanical characteristics of resistance to engraving with cutting objects.

## Claims

1. Mould or tray for foodstuffs, comprising an elastic and flexible edge (2), equipped with at least one rigid reinforcement (9, 10), an elastic and flexible container (1, 5), **characterised in that** the edge (2) is adapted to structurally cooperate due to a "pre-loaded effort" status thereof.

2. Mould or tray according to claim 1, **characterised in that** each rigid annular reinforcement (9, 10) is immersed in the edge (2) composed of a lower layer or rib (4) and of an upper layer or cover (7), and **in that** the recess (3) in which said rigid reinforcement (9, 10) is housed, is immersed in the edge (2) at a height for which the upper layer (7) is thins, while the lower layer (4) has a great thickness.

3. Mould or tray according to claim 2, **characterised in that** said lower layer or rib (4) only partially covers each rigid annular reinforcement (9), making this latter one accessible through a groove (6).

4. Mould or tray according to claim 2, **characterised in that** a pair of projecting undercuts (8), in a single piece with the upper section of the edge (2), are adapted to hold the rigid reinforcement (10) ensuring and constraining this latter one to its own seat (3).

5. Mould or tray according to claim 2, **characterised in that** a tissue reinforced with rigid entangled wire arranged towards the projecting side of the edge (2), is covered by the lower section (4) of the edge (2) and repaired by the upper layer (7) of the edge (2).

6. Mould or tray according to any one of the previous claims, **characterised in that** said mould or tray is adapted to become operating after having assumed a stable geometric configuration corresponding to a "pre-loaded effort" status, said configuration depending on a starting configuration corresponding to a "normal effort" status.

7. Mould or tray according to claim 6, **characterised in that** the starting configuration, corresponding to the "normal effort" status, is the one in which the edge (2) is slanted or concave, while the operating configuration, corresponding to a "pre-loaded effort" status, is the one in which the edge (2) is slanted in reverse or convex.

8. Mould or tray according to any one of claims 1 to 6, **characterised in that** it is made of products derived from an elastomer, in particular thermoplastic material.

9. Mould or tray according to any one of claims 1 to 8, **characterised in that** it is made of silicone or platinum silicone or peroxide silicone.

10. Process for producing a mould or tray according to claim 6 or 7, **characterised in that** it comprises the following steps:
a) moulding a mass of elastic and flexible material of an elastomer type, by means of a mould suitably connected to said reinforcement (9, 10);
b) changing the geometric shape of the edge (2) by reverting the slanting or concavity of the edge (2) with the consequent stretching of the elastomer (4) distributed next to the reinforcement (9, 10);
c) transporting and lifting the tray by grasping the edge (2) with the fingers of a hand.
